**Europäisches Patentamt**

**European Patent Office**

**Office européen des brevets**

(19)

(11) Veröffentlichungsnummer: **0 051 105**
A2

(12)

# EUROPÄISCHE PATENTANMELDUNG

(21) Anmeldenummer: **81104151.6**

(22) Anmeldetag: **30.05.81**

(51) Int. Cl.³: **B 65 G 47/24**
**B 23 Q 7/18**

(30) Priorität: **03.11.80 DE 3041376**

(43) Veröffentlichungstag der Anmeldung:
**12.05.82 Patentblatt 82/19**

(84) Benannte Vertragsstaaten:
**CH FR GB IT LI SE**

(71) Anmelder: ZAHNRADFABRIK FRIEDRICHSHAFEN
AKTIENGESELLSCHAFT
**Löwentaler Strasse 100**
**D-7990 Friedrichshafen 1(DE)**

(72) Erfinder: **Folz, Peter**
**Goldschmiedstrasse 1**
**D-7990 Friedrichshafen 1(DE)**

(72) Erfinder: **Hörl, Adolf**
**Auerhahnweg 8**
**D-7990 Friedrichshafen 5(DE)**

(54) **Vorrichtung zum Transportieren oder Zwischenspeichern von Werkstücken.**

(57) Die Erfindung bezieht sich auf eine Vorrichtung zum vorübergehenden Speichern von Werkstücken auf Trägerpaletten, auf welche die Werkstücke voll automatisch unter Einsatz von Handhabungsgeräten aufgesetzt werden und von denen diese ebenfalls mit Hilfe von Handhabungsgeräten voll automatisch abgenommen werden sollen. Das Abnehmen der Werkstücke mit Hilfe von Handhabungsgeräten setzt voraus, daß die Werkstücke auf den einzelnen Paletten an der Abnahmestelle immer eine genau definierte Lage einnehmen. Um diese definierte Lage zu garantieren wird erfindungsgemäß vorgeschlagen, im Transportweg der mit jeweils einem Werkstück beladenen Paletten eine Zentriereinrichtung vorzusehen, die das Werkstück in die definierte Lage auf der Palette ausrichtet.

FIG. 1

EP 0 051 105 A2

ZAHNRADFABRIK FRIEDRICHSHAFEN

- Aktiengesellschaft --

7990    Friedrichshafen

Titel:    Vorrichtung zum Transportieren oder  Zwischenspeichern von Werkstücken

Die vorliegende Erfindung bezieht sich auf eine Vorrichtung
zum Transportieren und/oder Zwischenspeichern von Werkstücken,
welche auf Trägerpaletten untergebracht sind.

In der modernen Fertigungstechnik werden heute vielfach
Handhabungsgeräte eingesetzt, um Werkstücke, die beispielsweise in einer Werkzeugmaschine oder aber auch in einem Glühofen
oder dgl. bearbeitet bzw. behandelt wurden, auf einen Transportweg zu geben oder aber in ortsbeweglichen Zwischenspeichern
abzulegen. Von dem Transportweg bzw. aus dem ortsbeweglichen
Zwischenspeicher werden sie für eine nachfolgende Behandlung
oder Bearbeitung dann wiederum mit Hilfe von Handhabungsgeräten
abgenommen.

Es ist bekannt, die einzelnen Werkstücke dabei auf Paletten
abzugeben, die ihrerseits auf einem Transportband, z.B. Transportketten, vorzugsweise auch in einem ortsbeweglichen Zwischenspeicher, wobei im Interesse der genauen räumlichen Zuordnung
der Werkstücke die Paletten in ihrer Form den Werkstücken
angepaßt werden. So werden beispielsweise zum Transport von

5728 F

zu bearbeitenden, z.B. auch zu härtenden Zahnrädern , Paletten vorgesehen, welche einen Dorn in der Mitte tragen, auf den die jeweils unterzubringenden Zahnräder so aufgesetzt werden, daß sie in einer genau definierten Lage zur Palette festgehalten sind. Für die Aufnahme von Scheiben oder dgl. werden die Paletten mit entsprechenden Lagefixierungsanschlägen versehen, die genau auf die einzelnen Werkstücke abgestimmt sind.

Auf diese Weise wird erreicht, daß im Transportweg, also beispielsweise auch beim Zwischenspeichern in einem ortsbeweglichen Speicher, jedes einzelne Werkstück zu den einzelnen Taktzeiten eine definierte Lage einnimmt, so daß ein automatisches Entnehmen, beispielsweise mittels eines Handhabungsgerätes, unmittelbar möglich ist.

Nachteilig bei einer derartigen Anordnung ist, daß selbst bei kleineren Maßänderungen oder gar beim Wechsel der Serien die Paletten ausgewechselt oder aber umgerüstet werden müssen. Da im allgemeinen auf einer Transportbahn oder insbesondere auch in einem ortsbeweglichen Speicher die Zahl der Paletten im allgemeinen recht groß ist, ist das Umrüsten bzw. Auswechseln kostspielig und zeitraubend.

Aufgabe der Erfindung ist es, eine Vorrichtung zum Transportieren und/oder Zwischenspeichern von Werkstücken auf Trägerpaletten der vorgenannten Art so

5728 F

weiter zu bilden, daß ein Werkstücktransfer mit einheitlichen Paletten auch bei unterschiedlichen Werkstückabmessungen so betrieben werden kann, daß der Zugriff von Handhabungsgeräten in stets identischer Übernahmeposition, bzw. ohne daß diese nachgesteuert werden müssen, erfolgen kann.

Diese Aufgabe wird mit einer Vorrichtung mit den Merkmalen des Patentanspruches 1 gelöst.

Vorteilhafte Weiterbildungen und erfinderische konstruktive Ausgestaltungen ergeben sich unmittelbar aus den Unteransprüchen.

Bei der Vorrichtung nach der Erfindung ist also im Transportweg, und zwar vorzugsweise unmittelbar vor der Entnahmestelle für die Werkstücke, eine Zentriereinrichtung vorgesehen, welche die einzelnen Werkstücke, die an sich auf der Palette verschoben werden können und damit im allgemeinen während des Transportes auch verschoben werden, so ausrichtet, daß sie eine definierte Lage zu der Palette und damit zum Transportweg bzw. dem gesamten Speicher einnehmen.

Durch diese Maßnahme wird erreicht, daß eine Lagerhaltung an unterschiedlichen Paletten entfällt und mit Hilfe einer einfachen Zentriereinrichtung, die vorzugsweise in Form eines als Zentrierklappe oder als Abstreifer ausgebildeten Zentriergliedes aufgebaut ist, eine definierte Zuordnung von Werkstück zu

5728 F

4

Paletten jeweils erzwungen wird. Dabei werden mit Hilfe der Zentriereinrichtung, welche die Lage der Werkstücke auf den Paletten genau fixieren, die Werkstücke so gegen einen Anschlag geschoben, daß der vorgenannte Zweck der definierten Zuordnung sicher erreicht wird.

Einzelheiten und Ausgestaltungsmöglichkeiten einer Vorrichtung nach der Erfindung werden im folgenden in Verbindung mit den anliegenden Zeichnungen erläutert. In diesen Zeichnungen zeigen:

Fig. 1    ein Transportweg, wie er beispielsweise innerhalb eines ortsbeweglichen Speichers vorgesehen sein kann, mit einer Zentriereinrichtung nach der Erfindung in Seitenansicht und

Fig. 2    die zugehörige Draufsicht.

Bei der Darstellung in der Zeichnung sind hierbei lediglich die Teile eines Transportweges wiedergegeben, welche für das Verständnis der Erfindung von Bedeutung sind.

In den Figuren ist mit 1 und 2 ein Kettenförderer bezeichnet, auf welchen Paletten 3 in einem definierten Abstand angeordnet sind. Es ist angenommen, daß auf diesen Paletten ringförmige Werkstücke, beispielsweise Lagerhülsen aufgesetzt sind, welche bei I aufgesetzt

5728 F

wurden und welche im Laufe eines Transportweges an der Entnahmestelle IV durch ein Handhabungsgerät abgenommen werden sollen.

Im Gegensatz zu bekannten Vorrichtungen der genannten Gattung sind die Paletten 3 in ihren Abmessungen grösser als die Werkstücke 4, so daß diese, wie aus den verschiedenen Positionen I, II, III und IV zu ersehen, verschiedene Lagen auf der Palette einnehmen können. Die Paletten selbst haben hierbei eine Randbegrenzung und in der Mitte einen Führungsdorn.

Um die Werkstücke in der Entnahmeposition IV in einer definierten Lage zu haben, ist unmittelbar vor der Entnahmeposition, nämlich in der Position III eine Zentriereinrichtung 5 vorgesehen. Diese Zentriereinrichtung besteht aus zwei Zentrierklappen 6, welche V-förmig angeordnet sind in einer Weise, daß sie in die Transportrichtung des Kettenförderers 1, 2 mit der schmäleren Öffnung weisen. Die Paletten 3 mit den darauf befindlichen Werkstücken 4 werden von links nach rechts transportiert, wobei die Werkstücke, gleichgültig welche Lage sie auf der Palette eingenommen haben, durch die Zentrierklappen 6 verschoben werden, und zwar zunächst bis sie genau in der Mitte liegen und dann bis sie am Mitteldorn bzw. an der Randbegrenzung der Paletten anstossen. Die Zentrierklappen 6 selbst sind dabei ausschwenkbar im Transportweg der Werkstücke angeordnet, und zwar an einem Kipphebel 7, welcher bei 8 drehbar so gelagert

5728 F

6

ist, daß er aus dem Transportweg der Werkstücke nach oben weggeschwenkt werden kann.

Um, insbesondere bei schweren Werkstücken bzw. bei großer Reibung zwischen Werkstück 4 und Palette 3 ein einwandfreies Zentrieren zu erreichen, kann ein die Zentrierklappen 6/nach unten zusätzlich belastendes Gewicht 9 und/oder eine Zugfeder 10 vorgesehen werden, die ein zu frühes Ausschwenken der Klappe 6 aus dem Transportweg der Werkstücke 4 verhindert.

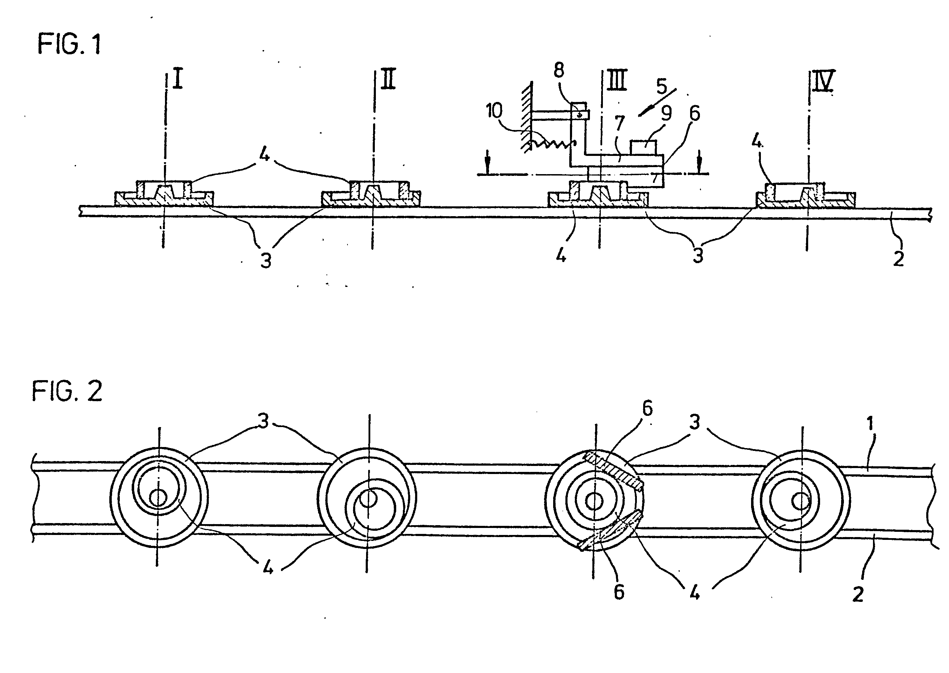

Aus der Fig. 2 ist dabei zu ersehen, daß durch die Zentrierklappen 6 das Werkstück 4 in eine genau definierte Lage zur Palette 3 gebracht wird, die durch den Mitteldorn der Palette bzw. die Randbegrenzung genau bestimmt wird, obwohl Durchmesser des Werkstückes und Durchmesser des Dornes unterschiedlich sind. Es ist aus der Fig. auch unmittelbar zu ersehen, daß die Wirkung bei Werkstücken unterschiedlichen Durchmessers jeweils die gleiche ist, so daß die Paletten für alle Werkstücke mit einer Innenbohrung und einem Aussendurchmesser, der nicht größer ist als der lichte Durchmesser der Paletten, gleichermaßen geeignet sind, so daß bei Wechsel der Werkstücke die Paletten nicht umgerüstet werden müssen. Da die Paletten eine feste Zuordnung zu der durch die Kettenförderer 1 und 2 gegebenen Führungsbahn haben, ist zwischen dem Platz der Zentrierklappe und der Übernahmeposition, also der Position III und der Position IV eine stets reproduzierbare Lage-Geometrie gegeben, so daß bei einheitlichen

5728 F

Abständen der Paletten ein stets identischer Zugriffspunkt für das bzw. die Handhabungsgeräte sichergestellt ist.

Die Erfindung wurde anhand einer schematisch wiedergegebenen Ausführungsform erläutert. Für den auf dem Gebiet tätigen Fachmann ergibt sich dabei ohne weiteres, daß die Zentriereinrichtung, insbesondere je nach Ausbildung, Gewicht und Material der auszurichtenden Werkstücke auch in anderer Weise realisiert werden kann. So ist es beispielsweise denkbar, statt der Anordnung von zwei Zentrierflächen, einen U-förmigen Abstreifer beispielsweise auch aus einem elastischen Material vorzusehen, wenn entsprechend leicht verschiebliche Werkstücke ausgerichtet werden sollen.

Es ist für den Fachmann auch ersichtlich, daß, sofern bei Zwischenspeichern ein Vorwärts- und Rückwärtsbetrieb der Transportglieder, also der Transportketten 1 und 2 notwendig ist, zwei Zentriereinrichtungen vorgesehen werden können, von denen jede eine Ausrichtung der Werkstücke der Transportrichtungen übernimmt. Dabei kann dann das Einschwenken einer der Zentriereinrichtungen über eine starre Kupplung das Ausschwenken der anderen Zentriereinrichtung erzwingen, oder aber es kann eine elektrische Abhängigkeitsverriegelung zwischen den beiden Zentriereinrichtungen vorgesehen werden.

Mit der Zentriereinrichtung kann darüberhinaus eine Abtasteinrichtung, beispielsweise ein induktiver

5728 F

Sensor vorgesehen werden, welcher das Vorhandensein eines Werkstückes auf einer Palette anzeigt und für einen getakteten Betrieb oder aber für andere Überwachungseinrichtungen auswertet.

Sofern Werkstücke unterschiedlicher Höhe behandelt werden sollen, empfiehlt es sich die Zentriereinrichtung ebenfalls höhenverstellbar am Gehäuse zu befestigen, um das Ausschwenken entsprechend zu erleichtern.

5728 F

9

Bezugszeichenregister

1)

      Kettenförderer

2)

3)     Palette

4)     Werkstück

5)     Zentiereinrichtung

6)     Zentrierklappe

7)     Kipphebel

8)     Schwenklagerung

9)     Gewicht

10)    Zugfeder

0051105

ZAHNRADFABRIK FRIEDRICHSHAFEN

- Aktiengesellschaft -

7990    Friedrichshafen


Titel:    Vorrichtung zum Transportieren oder Zwischenspeichern von Werkstücken


P A T E N T A N S P R Ü C H E


1.    Vorrichtung zum Transportieren und/oder
Zwischenspeichern von Werkstücken (4) auf
Trägerplatten (3), auf welche die Werkstücke insbesondere unter Einsatz von Handhabungsgeräten aufgesetzt und von denen diese
automatisch abgenommen werden sollen, dadurch
gekennzeichnet, daß im Transportweg der mit jeweils einem Werkstück (4) beladenen Palette
(3) eine Zentriereinrichtung (5) vorgesehen
ist, die das Werkstück (4) in eine definierte
Lage auf der Palette (3) ausrichtet.


2.    Vorrichtung nach Anspruch 1, dadurch gekennzeichnet, daß die zur Aufnahme der Werkstücke
(4) bestimmte Palette (3) mindestens einen Anschlag (Rand) aufweist, gegen den das
Werkstück durch die Zentriereinrichtung (5)
verschoben wird.


Anwaltsakte 5728

2

3. Vorrichtung nach Anspruch 2, zur Aufnahme von ringförmig ausgebildeten Werkstücken, dadurch gekennzeichnet, daß in der Mitte der Palette (3) ein Dorn mit einem Durchmesser kleiner als der kleinste Innendurchmesser der aufzunehmenden Werkstücke (4) vorgesehen ist, so daß die Werkstücke (4) nach Durchlaufen der Zentriereinrichtung (5) einseitig an dem Dorn anliegen.

4. Vorrichtung nach Anspruch 1, dadurch gekennzeichnet, daß die Zentriereinrichtung (5) einen aus dem Transportweg der Werkstücke (4) ausschwenkbaren Abstreifer (6) aufweist.

5. Vorrichtung nach Anspruch 4, dadurch gekennzeichnet, daß der Abstreifer (6) V-förmig ausgebildet und derart im Transportweg ausschwenkbar angeordnet ist, daß die Spitze des V in die Transportrichtung weist.

6. Vorrichtung nach Anspruch 4, dadurch gekennzeichnet, daß der Abstreifer (6) als in den Transportweg eingreifende Klappe ausgebildet ist, die am Gehäuse derart drehbar (8) befestigt ist, daß sie durch die sich beim Transport anlegenden Werkstücke (4) aus dem Transportweg geschwenkt wird.

7. Vorrichtung nach Anspruch 6, dadurch gekennzeichnet, daß die Zentrierklappe (6) in den zwei möglichen Bewegungsrichtungen ausschwenkbar angeordnet ist.

5728 F

3

8. Vorrichtung nach einem der Ansprüche 1 bis 7, dadurch gekennzeichnet, daß die Zentriereinrichtung (5) jeweils unmittelbar vor einer Entnahmestelle für die Werkstücke (4) nach ihrem Transport und/oder Speicherung angeorndet ist.

9. Vorrichtung nach einem der Ansprüche 1 bis 8, dadurch gekennzeichnet, daß der Zentriereinrichtung (5) ein Überwachungsorgan, beispielsweise ein induktiver Sensor zugeordnet ist, der die Anwesenheit eines Werkstückes (4) aus einer Palette (3) und deren augenblickliche Lage im Transport- und Speichersystem anzeigt.

5728 F

FIG. 1

FIG. 2

0051105

1/1

5728 F